# EUROPEAN PATENT SPECIFICATION

(11) **EP 0 385 569 B1**
(45) Date of publication and mention of the grant of the patent: **10.04.1996**
(21) Application number: 90300597.3
(22) Date of filing: 19.01.1990
(51) Int. Cl.: G01N 27/60, F02C 7/05

(54) **Method and device for detecting charged particles in a gas flow**
Verfahren und Vorrichtung zur Feststellung von geladenen Teilchen in einer Gasströmung
Procédé et dispositif de détection de particules chargées dans un courant de gaz

(30) Priority: 20.01.1989 GB 8901238
(43) Date of publication of application: 05.09.1990
(73) Proprietor: STEWART HUGHES LIMITED, Eastleigh, Hampshire, SO5 3YG (GB)
(72) Inventor: Fisher, Celia Elizabeth, Shirley, Southampton (GB); Forfitt, Roy, Whiteparish, Wiltshire SP5 2QE (GB)
(74) Representative: Milhench, Howard Leslie

(56) References cited:
- EP-A- 0 256 846
- GB-A- 1 274 193
- US-A- 4 591 794

## Description

### IMPROVEMENTS RELATING TO CHARGE SENSORS

The present invention relates to a charged particle sensor, to a method of integrating a charged particle sensor into a gas turbine engine or the like, and to a method of detecting charged particles in the gas flow path of a gas turbine engine or the like.

The detection of debris in the various gas flow paths of a gas turbine engine is an area of research which we have been investigating in recent years inter *alia* as a means of providing an early warning of engine malfunction or damage so that remedial action can be taken before engine failure occurs. We have found that debris in a gas flow path may be detected by sensing electrostatic charge carried by the debris and this technique promises to be very effective. However charge sensors suitable for this purpose are not incorporated into the original designs of gas turbine engines and we have found that engine manufacturers and operators are extremely reluctant to countenance modification of engines for enabling the charged particles which constitute the debris in the gas flow path to be detected. Hitherto known charge sensors have, so far as we are aware, all been of a form which results in some degree of intrusion into the gas flow path of the engine and/or requires some modification of the engine for mounting of the sensor and neither of these aspects will have featured in the original design of the engine. Therefore such sensors are prima facie unacceptable as add-on components to an existing engine design.

Thus for example one kind of charge sensor that we have utilized in our research comprises a sensing member mounted in and insulated from a housing which is adapted to be secured to the outside of the engine casing with the sensing member arranged to operate through an aperture in the casing and to be substantially flush with the inner surface of the casing. This particular kind of sensor is designed to minimise intrusion into the gas flow path of the engine but is such that substantial modifications in the form of sensor viewing apertures and securing bolt receiving holes have to be made to the engine casing. When it is considered that a fully monitored engine would include a plurality of such sensors, possibly ten or more, at various engine locations, it will be understood that the fitting of the sensors would require relatively major structural modifications to be made to the engine which were not envisaged in the original engine design and that engine operators and manufacturers would be reluctant to accept them. US-A-4591794 discloses an electrostatic probe adapted to be mounted in a borescope access hole in a gas turbine engine. EP-A-256846 describes a sensor assembly for inclusion in the gas path of a gas turbine engine. Both of the aforementioned
documents were cited against this specification by the European Patent Office during examination.

It is moreover the case that the environment within a gas turbine engine is generally hostile and extreme stress can be imposed on sensors in the gas flow path. Hitherto known sensors therefore have had to be carefully designed to minimise the risk of their disintegration, which could result in damage to the engine, and in consequence have generally been expensive to manufacture and/or install in the engine.

Accordingly, it would be desirable to be able to detect electrostatically charged debris in the gas flow path of a gas turbine engine for example without the need to provide additional sensors which intrude into the engine gas flow paths and/or require substantial modifications to the engine which were not envisaged in the original engine design.

We have realised that the detection of charged debris in the gas flow path of an engine may be effected by utilization of existing parts or components of the engine as charge sensors. By electrically insulating existing portions of the engine, such portions can be used as a means by which charged particles constituting debris in the gas flow path can be detected.

In one aspect the invention provides a method of integrating a charged particle sensor into a gas turbine engine or the like having a gas flow path, the method comprising the steps of selecting from within the engine an existing part or component designed to perform a function associated with the gas flow path of the engine, electrically isolating at least a portion of the selected part from the engine such that the selected part can continue to perform its designed function, and providing an electrical connection to the isolated portion to enable the portion to output a signal representative of charged particles in the gas flow path in the vicinity of the part or component, the portion thereby serving as a charged particle sensor.

In another aspect the invention provides a method of detecting charged particles in a gas flow path of a gas turbine engine or the like, the method comprising the steps of electrically isolating at least a portion of an existing part of component of the engine which part or component is designed to perform a function associated with the gas flow path of the engine such that the part or component can continue to perform its designed function, providing an electrical connection to the isolated portion to enable the portion to output a signal representative of charged particles in the vicinity of the part or component, the portion thereby serving as a charged particle sensor and inputting the signal from the isolated portion to signal conditioning apparatus for producing conditioned signals representative of the passage of charged particles in the vicinity of the selected part or component.

In a further aspect the invention provides a gas turbine engine in which a charged particle sensor in integrated into the engine for sensing charged particles in the gas flow path thereof, the sensor being formed by electrically isolating at least a portion of an existing part or component of the engine from the engine, which part or component is designed to perform a function associated with the gas flow path of the engine, such that the component can continue to perform its designed function, and by providing an electrical connection to the isolated portion to enable the portion to output a signal representative of charged particles in a gas flow path in the vicinity of the part or component.

It is common practice that a gas turbine engine for example should incorporate various sensors in the gas flow paths of the engine for monitoring parameters such as temperature, gas flow velocity etc. For example, it is common practice to provide an array of thermocouple devices downstream of the turbine to enable measurement of the temperature of gas exhausted from the combustion chamber. The original engine design takes into account the presence of these sensors. It is thus a preferred feature of the present invention to modify existing sensors, as appropriate, to enable them additionally to be used as charge sensors.

In a preferred embodiment of the invention, to be described in greater detail hereinafter, the body of an existing thermocouple provided in the engine is electrically isolated from the engine so that it can be used as a charge sensor and an electrical connection is made to the thus isolated body to provide a means by which signal conditioning apparatus or the like can be connected to the isolated body.

The invention thus offers to the engine manufacturer or operator the significant advantage of new technology, namely the sensing of electrostatically charged debris particles within the engine, without need for significant modification of existing engine designs.

In order that the invention may be well understood, an embodiment thereof will now be described, by way of example only, with reference to the accompanying drawings, in which:
Figure 1 is a schematic view of a thermocouple typical of thermocouples found in gas turbine engines;
Figure 2 is a schematic view of the thermocouple of Figure 1 modified in accordance with the present invention.

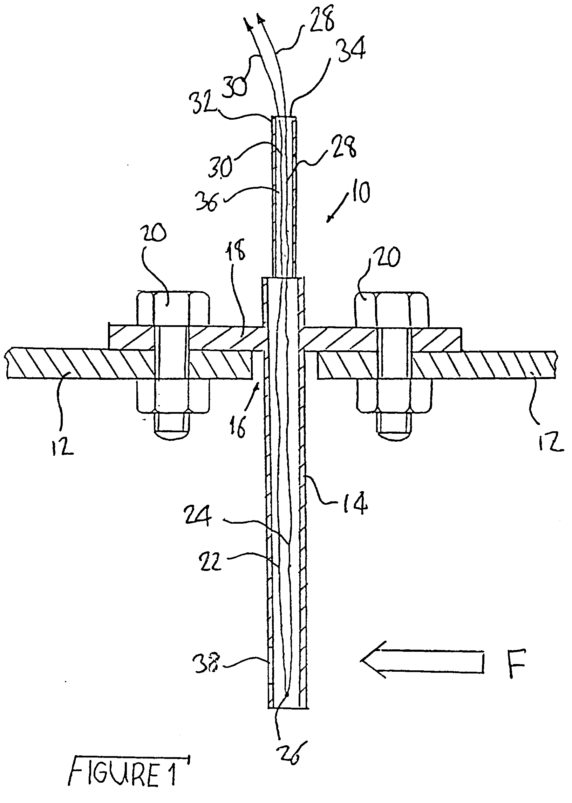

Referring now to Figure 1 there is shown a typical thermocouple assembly 10 bolted to a portion 12 of a body of a gas turbine engine. As has already been mentioned it is not uncommon for gas turbine engines to be designed to incorporate a number of sensors such as the thermocouple 10 shown at desired locations within the engine. A number of thermocouple assemblies 10 may for example be provided in an array downstream of the turbine to enable the temperature of gasses exhausted from the combustion chamber and through the turbine to be measured to detect hot or cold spots in the engine.

The thermocouple assembly 10 comprises an elongate tubular housing 14 which extends through an aperture 16 in the engine body 12 and a securing flange 18 which is secured to the engine body by way of securing bolts 20 to hold the assembly 10 in position. A pair of thermocouple wires 22,24 are provided in the housing and are joined at one end to form a thermocouple bead 26. The wires 22,24 extend from the bead 26 along the length of the housing 14 to connect with corresponding wires 28,30 in an armoured cable 32 which wires 28,30 are in turn connected to signal conditioning circuitry (not shown) at another location. The armoured cable 32 may for example comprise a casing 34 of for example stainless steel connected electrically to the tubular housing 14 and an insulating powder 36 which isolates the conducting wires 28,30 from each other and the casing 34 whilst allowing the cable to be bent.

An aperture 38 is provided at the end of the housing 14 to enable gas from the engine to come into contact with the thermocouple bead 26. In Figure 1 the direction of gas flow is indicated by arrow F and normally the aperture 38 is oriented to face downstream in relation to the gas flow to protect the thermocouple bead 26 against damage from the high velocity gases.

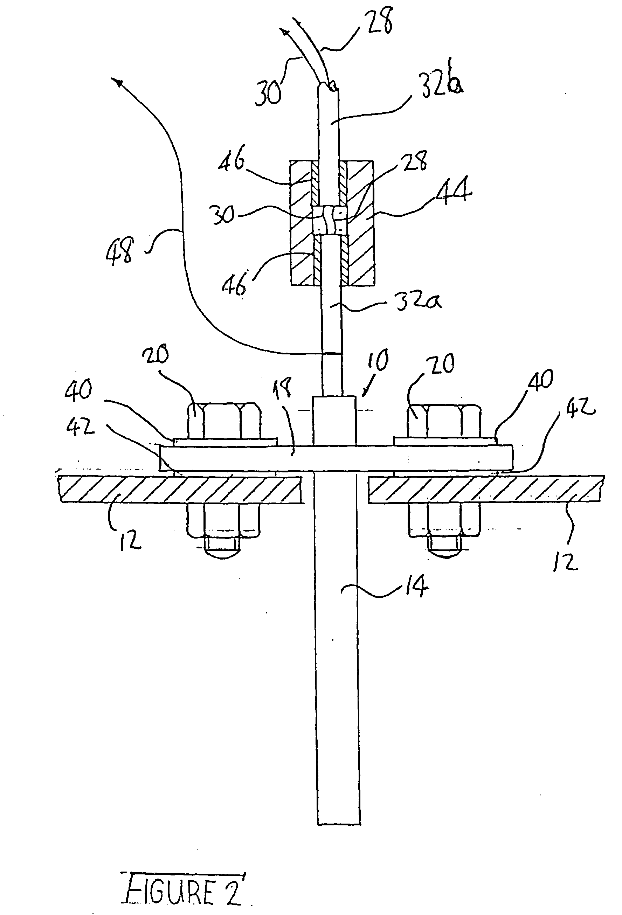

The thermocouple assembly 10 shown in Figure 1 can be modified in accordance with the present invention to provide an integrated sensor for detecting the presence of charged debris particles in the gas stream in addition to the temperature sensing function already provided and such a modification is shown in Figure 2. As may be seen from Figure 2, the thermocouple assembly is electrically isolated from the engine body 12 by way of insulating washers 40,42 which respectively isolate the flange 18 from the bolt 20 and the engine body 12. The armour of the armoured cable 32 is normally electrically connected at one end to the thermocouple assembly and at the other end (not shown) to a reference potential which may be at the same potential as the engine body and in order to isolate the thermocouple from this reference potential the armour of the cable is cut to form to cable portions 32a, 32b which are held together by way of an isolating clamp 44 which is shown in section in Figure 2. An insulating sheath 46 is placed around each of the end portions of the cable portions 32a,32b to isolate the end portions from the clamp 44 and the clamp is arranged to hold the end portions in spaced relation to electrically isolate the cable portions 32a,32b from one another. The conducting wires 28,30 extend across the space between the clamped end portions to provide an electrical path for signals from the thermocouple to signal conditioning apparatus (not shown).

The thus described thermocouple assembly is electrically isolated from the engine body 12 and any other reference potential and can be used in the detection of charged particles in the gas flow path. In order to detect signals sensed by the isolated thermocouple housing, the housing is arranged to be connectable to signal conditioning apparatus and the like by way of an insulated wire 48 electrically connected to any suitable part of the isolated assembly such as for example the associated portion 32a of armoured cable.

An embodiment of the invention having been described it should be apparent that many modifications are possible. For example it is envisaged that the housing of any suitable sensor, and not just a thermocouple housing, in a gas turbine engine could be modified to enable charged particles to be detected. Thus, pressure rakes for example, which are commonly incorporated by design into gas turbine engines, could be modified to provide an integrated sensor for detecting the presence of charged particles as well as the pressure of gas in the gas flow path. Indeed it is not intended that the present invention should be limited to the adaptation of existing sensors since it is possible, at least in theory, to modify any suitable part of the engine to be electrically isolated from the rest of the engine. For example, stator blade could be modified in this way, although this might prove to be undesirable in practice on the ground of cost. Furthermore, while the embodiment of the invention has been described by reference to gas turbine engines, it is to be appreciated that it may be applicable also to other installations.

## Claims

1. A method of integrating a charged particle sensor into a gas turbine engine or the like having a gas flow path, the method comprising the steps of selecting from within the engine an existing part or component (10) designed to perform a function associated with the gas flow path of the engine, electrically isolating at least a portion (14) of the selected part from the engine such that the selected part can continue to perform its designed function, and providing an electrical connection (48) to the isolated portion to enable the portion to output a signal representative of charged particles in the gas flow path in the vicinity of the part or component, the portion thereby serving as a charged particle sensor.

2. A method as claimed in claim 1, wherein the selected part or component comprises a sensor (10) having a housing (14), and a portion of the housing is electrically isolated from the sensor to form the said isolated portion.

3. A method as claimed in claim 2, wherein the electrically isolated portion of the housing comprises a portion of the housing that extends into the gas flow path.

4. A method of detecting charged particles in a gas flow path of a gas turbine engine or the like, the method comprising the steps of electrically isolating at least a portion (14) of an existing part or component (10) of the engine which part or component is designed to perform a function associated with the gas flow path of the engine such that the part or component can continue to perform its designed function, providing an electrical connection (48) to the isolated portion to enable the portion to output a signal representative of charged particles in the vicinity of the part or component, the portion thereby serving as a charged particle sensor, and inputting the signal from the isolated portion to signal conditioning apparatus for producing conditioned signals representative of the passage of charged particles in the vicinity of the selected part or component.

5. A method as claimed in claim 4, wherein the selected part or component comprises a sensor (10) having a housing (14) and a portion of the housing is electrically isolated from the sensor to form the said isolated portion.

6. A method as claimed in claim 6 wherein the electrically isolated portion of the housing comprises a portion of the housing which extends into the gas flow path.

7. A gas turbine engine in which a charged particle sensor is integrated into the engine for sensing charged particles in the gas flow path thereof, the sensor being formed by electrically isolating at least a portion (14) of an existing part or component (10) of the engine from the engine (12), which part or component is designed to perform a function associated with the gas flow path of the engine, such that the component can continue to perform its designed function, and by providing an electrical connection (48) to the isolated portion (14) to enable the portion (14) to output a signal representative of charged particles in a gas flow path in the vicinity of the part or component, the portion thereby serving as a charged particle sensor.

8. An engine as claimed in claim 7, wherein the selected part of component comprises a sensor (10) having a housing (14), and a portion of the housing is electrically isolated from the sensor to form the said isolated portion.

9. An engine as claimed in claim 8, wherein the electrically isolated portion of the housing comprises a portion of the housing that extends into the gas flow path.

10. An engine as claimed in claim 7 or 8 or 9, wherein the electrical connection is arranged to enable the output signal to be input to signal conditioning apparatus for producing signals representative of the passage of charged particles in the vicinity of the sensor.

## Patentansprüche

1. Verfahren zum Integrieren eines Sensors für geladene Teilchen in einer Gasturbinenmaschine und dergleichen mit einem Gasströmungspfad, das folgende Schritte aufweist: Auswählen eines vorhandenen Teils oder eines Bauteils (10) innerhalb der Maschine, das dazu konzipiert ist, eine mit dem Gasströmungspfad der Maschine in Zusammenhang stehende Funktion auszuführen; elektrisches Isolieren zumindest eines Abschnitts (14) des ausgewählten Teils in solcher Weise gegen die Maschine, daß das ausgewählte Teil seine konzipierte Funktion weiterhin ausführen kann; und Herstellen einer elektrischen Verbindung (48) zum isolierten Abschnitt, damit dieser ein Signal ausgeben kann, das für geladene Teilchen im Gasströmungspfad in der Nähe des Teils oder der Bauteile repräsentativ ist, wodurch der Abschnitt als Sensor für geladene Teilchen dient.

2. Verfahren nach Anspruch 1, bei dem das ausgewählte Teil oder Bauteil einen Sensor (10) mit einem Gehäuse (14) aufweist und ein Teil des Gehäuses elektrisch gegen den Sensor isoliert ist, um den genannten isolierten Abschnitt zu bilden.

3. Verfahren nach Anspruch 2, bei dem der elektrisch isolierte Abschnitt des Gehäuses einen Abschnitt des Gehäuses umfaßt, der sich in den Gasströmungspfad hinein erstreckt.

4. Verfahren zum Feststellen geladener Teilchen in einem Gasströmungspfad einer Gasturbinenmaschine oder dergleichen, das folgende Schritte aufweist: elektrisches Isolieren mindestens eines Abschnitts (14) eines vorhandenen Teils oder Bauteils (10) der Maschine, das so konzipiert ist, daß es eine in Zusammenhang mit dem Gasströmungspfad der Maschine stehende Funktion ausführt, in solcher Weise, daß das Teil oder Bauteil seine konzipierte Funktion weiterhin ausüben kann; Herstellen einer elektrischen Verbindung (48) zum isolierten Abschnitt, damit dieser ein für geladene Teilchen in der Nähe des Teils oder des Bauteils repräsentatives Signal ausgeben kann, wodurch der Abschnitt als Sensor für geladene Teilchen dient; und Eingeben des Signals vom isolierten Abschnitt in eine Signalaufbereitungseinrichtung zum Erzeugen aufbereiteter Signale, die für das Durchlaufen geladener Teilchen in der Nähe des ausgewählten Teils oder Bauteils repräsentativ sind.

5. Verfahren nach Anspruch 4, bei dem das ausgewählte Teil oder Bauteil einen Sensor (10) mit einem Gehäuse (14) aufweist und ein Teil des Gehäuses elektrisch gegen den Sensor isoliert ist, um den genannten isolierten Abschnitt zu bilden.

6. Verfahren nach Anspruch 5, bei dem der elektrisch isolierte Abschnitt des Gehäuses einen Abschnitt des Gehäuses umfaßt, der sich in den Gasströmungspfad hinein erstreckt.

7. Gasturbinenmaschine, in die ein Sensor für geladene Teilchen integriert ist, um geladene Teilchen im Gasströmungspfad derselben zu messen, wobei der Sensor durch folgendes hergestellt ist: elektrisches Isolieren mindestens eines Abschnitts (14) eines vorhandenen Teils oder Bauteils (10) der Maschine (12) von derselben, wobei dieses Teil oder Bauteil so konzipiert ist, daß sie eine in Zusammenhang mit dem Gasströmungspfad der Maschine stehende Funktion ausübt, so daß das Bauteil seine konzipierte Funktion weiterhin ausüben kann, und Herstellen einer elektrischen Verbindung (48) zum isolierten Abschnitt (40), damit dieser ein für geladene Teilchen in einem Gasströmungspfad in der Nähe des Teils oder des Bauteils repräsentatives Signal ausgeben kann, wodurch der Abschnitt als Sensor für geladene Teilchen dient.

8. Maschine nach Anspruch 7, bei dem das ausgewählte Teil oder Bauteil einen Sensor (10) mit einem Gehäuse (14) aufweist und ein Teil des Gehäuses elektrisch gegen den Sensor isoliert ist, um den genannten isolierten Abschnitt zu bilden.

9. Maschine nach Anspruch 8, bei dem der elektrisch isolierte Abschnitt des Gehäuses einen Abschnitt des Gehäuses umfaßt, der sich in den Gasströmungspfad hinein erstreckt.

10. Maschine nach einem der Ansprüche 7, 8 oder 9, bei der die elektrische Verbindung so ausgebildet ist, daß das Ausgangssignal in eine Signalaufbereitungseinrichtung eingegeben werden kann, um Signale zu erzeugen, die für das Durchlaufen geladener Teilchen in der Nähe des Sensors repräsentativ sind.

## Revendications

1. Procédé pour intégrer un détecteur de particules chargées dans un moteur à turbine à gaz ou analogue ayant une trajectoire d'écoulement de gaz, le procédé comprenant les étapes consistant à sélectionner, dans le moteur, une pièce ou un composant existant (10), destiné(e) à exécuter une fonction associée à la trajectoire d'écoulement de gaz dans le moteur, à isoler électriquement, du moteur, au moins une partie (14) de la pièce sélectionnée, de façon que la pièce sélectionnée puisse continuer à exécuter la fonction pour laquelle elle a été conçue, et à réaliser une connexion électrique (48) sur la partie isolée, pour permettre à la partie d'envoyer en sortie un signal représentatif des particules chargées dans la trajectoire d'écoulement de gaz au voisinage de la pièce ou du composant, la partie servant de ce fait comme détecteur de particules chargées.

2. Procédé selon la revendication 1, dans lequel la pièce ou le composant sélectionné(e) comprend un détecteur (10) ayant une enveloppe (14), et une partie de l'enveloppe est électriquement isolée du détecteur pour former ladite partie isolée.

3. Procédé selon la revendication 2, dans lequel la partie électriquement isolée de l'enveloppe comprend une partie de l'enveloppe qui s'étend à l'intérieur de la trajectoire d'écoulement du gaz.

4. Procédé pour détecter des particules chargées dans une trajectoire d'écoulement de gaz d'un moteur à turbine à gaz ou analogue, le procédé comprenant les étapes consistant à isoler électriquement au moins une partie (14) d'une pièce ou d'un composant existante (10) du moteur, le composant ou la pièce étant conçu(e) de façon à exécuter une fonction associée à la trajectoire d'écoulement de gaz dans le moteur de façon que la pièce ou le composant puisse continuer à exécuter la fonction à laquelle il(elle) est destiné(e), à réaliser une connexion électrique (48) sur la partie isolée, pour permettre à la partie d'envoyer en sortie un signal représentatif des particules chargées au voisinage de la pièce ou du composant, la partie servant de ce fait comme détecteur de particules chargées et à envoyer le signal, provenant de la partie isolée, à un appareil de traitement des signaux, pour produire des signaux traités représentatifs du passage de particules chargées au voisinage de la pièce ou du composant sélectionné(e).

5. Procédé selon la revendication 4, dans lequel la pièce ou le composant sélectionné(e) comprend un détecteur (10) ayant une enveloppe (14) et une partie de l'enveloppe est électriquement isolée du détecteur pour former ladite partie isolée.

6. Procédé selon la revendication 5, dans lequel la partie électriquement isolée de l'enveloppe comprend une partie de l'enveloppe qui s'étend dans la trajectoire d'écoulement du gaz.

7. Moteur à turbine à gaz, dans lequel est intégré un détecteur de particules chargées pour détecter les particules chargées se trouvant dans sa trajectoire d'écoulement de gaz, le détecteur étant formé par isolement électrique, du moteur (12), d'au moins une partie (14) d'une pièce ou d'un composant existant(e) (10) du moteur, la pièce ou le composant étant conçu(e) pour exécuter une fonction associée à la trajectoire d'écoulement de gaz dans le moteur, de façon que le composant puisse continuer à exécuter la fonction à laquelle il est destiné, et réalisation d'une connexion électrique (48) sur la partie isolée (14) pour permettre à la partie (14) d'envoyer en sortie un signal représentatif de particules chargées dans une trajectoire d'écoulement de gaz au voisinage de la pièce ou du composant, la partie servant de ce fait de détecteur de particules chargées.

8. Moteur selon la revendication 7, dans lequel la partie ou le composant sélectionné(e) comprend un détecteur (10) ayant une enveloppe (14), et une partie de l'enveloppe est électriquement isolée du détecteur pour former ladite partie isolée.

9. Moteur selon la revendication 8, dans lequel la partie électriquement isolée de l'enveloppe comprend une partie de l'enveloppe qui s'étend dans la trajectoire d'écoulement de gaz.

10. Moteur selon la revendication 7 ou 8 ou 9, dans lequel la connexion électrique est disposée de façon à permettre au signal de sortie d'être envoyé à un appareil de traitement de signaux pour produire des signaux représentatifs du passage de particules chargées au voisinage du détecteur.
